# EUROPEAN PATENT SPECIFICATION

(11) **EP 2 193 040 B1**
(45) Date of publication and mention of the grant of the patent: **21.10.2015**
(21) Application number: 08803113.3
(22) Date of filing: 20.08.2008
(51) Int. Cl.: B60J 7/06

(54) **COVERING DEVICE FOR THE BODY OF A MEANS OF TRANSPORT**
ABDECKVORRICHTUNG FÜR DEN AUFBAU EINES TRANSPORTMITTELS
DISPOSITIF DE COUVERTURE POUR LA CARROSSERIE D'UN MOYEN DE TRANSPORT

(30) Priority: 28.08.2007 IT UD20070150
(43) Date of publication of application: 09.06.2010
(73) Proprietor: Dinamica S.r.l., 37044 Cologna Veneta (VR) (IT)
(72) Inventor: CAPPONI, Massimo, I-36057 Arcugnano (IT)
(74) Representative: Vanzini, Christian
(86) International application number: PCT/EP2008/060887
(87) International publication number: WO 2009/027285

(56) References cited:
- EP-A- 1 093 949
- US-A1- 2004 195 858
- US-A1- 2007 216 190
- US-B1- 6 481 779

## Description

### FIELD OF THE INVENTION

The present invention concerns a covering device for the containing body of a means of transport, such as for example a trailer truck, a truck, a railway wagon or suchlike. In particular, the present invention concerns a covering device provided with ribs, arches or other transverse elements, and provides that the transverse elements are equipped with relative rapid attachment and detachment members with respect to the supporting and drawing cables, so that each of them can be individually and quickly removed in the event of possible damage or breakage without the need to remove the relative cable, while at the same time ensuring a safe and strong connection between the arches and the cables, together with high reliability and long service life of this connection.

### BACKGROUND OF THE INVENTION

Covering devices are known, provided with ribs, arches, or more generally other transverse elements mounted on the bodies of industrial means of transport.

Covering devices normally allow to cover and uncover the relative load, so as to provide protection from atmospheric agents and, at the same time, prevent the accidental exit of part of the load during the movement of the means of transport.

Different types of covering device are known, provided with a plurality of arches disposed transversely along the length of the body and able to support a covering tarpaulin.

In this type of known device, the arches are moved by means of mechanical members, such as cables or ropes, either totally or partly automatic, or manual, in order to draw the tarpaulin concertina-wise and extend it between two opposite sides of the body, thus covering/uncovering the load.

In these known devices, the arches are mounted solidly, with their ends, on two running metal cables, which are normally disposed along the upper edges of the sides of the body.

The linear movement of the cables determines the reciprocal movement, in one direction or the other, of the arches that draw the tarpaulin so as to define the condition of covering or uncovering the load.

In this type of known device, each arch is attached to the cables by means of respective cylindrical bushings, in turn attached to the ends of the arch in a non-removable manner.

In this way, in order to dis-assemble and assemble each arch, the cables must necessarily be inserted into and dis-inserted from the cylindrical bushings.

One example of this solution is disclosed, for example, in EP-A-1.093.949, in the name of the Applicant, in which the ends of the arch may only extend longitudinally but cannot allow the substitution of the arch without removing the cable.

With this known solution, however, every time it is necessary to intervene on one or more intermediate arches, for example to carry out maintenance or replace them, it is necessary to dis-insert the cables, on one side or the other, from all the other adjacent arches, possibly removing them.

These known devices therefore require long and burdensome maintenance steps, and also to manage the spare parts in the store.

Moreover, specific tools are required in order to dis-insert the cables, which entails risks of accidents for the operator.

When the whole cover is to be replaced, for example when higher arches are to be provided, the known solution entails the need to dis-assemble at least partly the mechanical movement members too, thus further increasing the costs and times of the intervention.

US-A-2004/0195858 discloses a connection between the arches and the relative cable, which employs a bowl having at an end a tubular cable follower in which the cable is inserted. Although the connection is partly dismantable, at least a part of it remains always attached to the cable, so that it is not possible to intervene on the arches without removing the cables form the relative followers.

US-A-5.938.270, upon which the preamble of the main claim is based, discloses a quick release bow-to-cable connector which employs a plastic profile having a slot inside which a cable may slide. This solution, while it speeds and makes easy a maintenance work on the arches, is structurally weak, may suffer of problems of tight grip and positioning of the cable in its operation, and does not ensure reliability and long service life.

EP 1529671 A2 also discloses the preamble of claim 1. One purpose of the present invention is to achieve a covering device which allows to cover and uncover the body effectively, and which allows to obtain a rapid maintenance and/or replacement of the arches, when necessary, without requiring to dis-insert the adjacent arches.

Another purpose of the present invention is to achieve a covering device in which the possible replacement of the cover does not entail dismantling, even partially, the mechanical movement members of the arches.

Another purpose of the present invention is to achieve a covering device of a substantially universal type, that is, which can be applied indifferently on different types of body without requiring substantial modifications.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

A covering device according to the present invention comprises, as its main elements, at least:
- a tarpaulin able to be selectively disposed to cover the body of a means of transport;
- a plurality of transverse elements, for example ribs or arches, disposed sliding on the length of the body and able to draw the tarpaulin concertina-wise and extend it above the body;
- mechanical movement means, such as a cable or a rope, associated with the body and able to move the transverse elements on the length of the body, to move the tarpaulin between a position where it covers the load and a position where it does not cover the load.

In accordance with the above purposes, each transverse element comprises respective attachment members able to allow the rapid assembly/dis-assembly thereof on part of the mechanical movement means, to allow it to be detached from the movement means without affecting the adjacent transverse element and without affecting the relative cable.

According to a variant, each attachment member comprises at least a first element selectively removable from the relative transverse element and conformed so as to be, on one arched side thereof, removably coupled with the mechanical movement means and, on the other flat side thereof, attached to the relative transverse element, such as the arch, rib or other similar.

In this way, the attachment member allows to selectively free the constraint between the cables and the arch, allowing to individually remove the latter without affecting the adjacent transverse elements.

With the present invention, to remove each individual transverse element, it is therefore sufficient to remove the first element of the attachment member from the transverse element, freeing it independently with respect to the mechanical movement means.

The solution according to the present invention thus allows to reduce the times and costs of intervention for the maintenance and/or replacement of the transverse elements.

Moreover, the removal of the individual transverse elements, without having to intervene on the mechanical movement means, allows to use common tools, and to reduce the risks of accidents.

Another advantage of the solution according to the present invention is obvious when the cover is replaced, for example by providing transverse elements of different shapes, since it is possible to replace each individual transverse element without intervening on the mechanical movement means.

According to the present invention, the attachment member also comprises a second element conformed in a coordinated manner with the first element, and able to be positioned and clamped in cooperation with the latter so as to define the removable assembly on the mechanical movement means and the attachment to the transverse element.

According to a variant, the first element and the second element of the attachment member also comprise a reciprocally shaped segment, and able to define a same-shape coupling portion of the two elements.

According to another variant, the two elements are hinged to each other.

According to another variant, in which for each transverse element relative pads are provided for sliding on the body, the attachment members are provided in correspondence with the sliding pads and are mounted on the relative transverse element by means of the same attachment elements of the pads to the transverse element.

According to another variant in which the mechanical movement means comprises a cable, for example made of steel, the first element and possibly also the second element comprise at least an arched part defining, in the coupled condition, a seating of a shape mating with the steel cable, in order to wind the latter.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a means of transport to which a covering device according to the present invention is applied;
- fig. 2 shows an enlarged detail of the device in fig. 1;
- fig. 3 is a schematic and exploded view of the detail in fig. 2;
- fig. 4 shows the detail in fig. 2 in an assembled condition;
- fig. 5 is an exploded view of a part of the detail in fig. 2.

### DETAILED DESCRIPTION OF A PREFERENTIAL FORM OF EMBODIMENT

With reference to the attached drawings, a covering device 10 according to the present invention is installed on the body 11 of a means of transport, in this case a truck 12, for example an earthmoving truck, in order to selectively cover/uncover the body 11 with a covering tarpaulin 13.

In particular, the covering device 10 according to the present invention comprises a plurality of arched ribs 15 disposed transversely on the length of the body 11, and sliding with respect to the sides 14 of the latter. The covering tarpaulin 13 is supported and attached to the arched ribs 15 in a substantially known manner.

The device 10 also comprises a movement mechanism 16, disposed longitudinally to the body 11 and able to move the arched ribs 15 on the length of the body 11, to move the covering tarpaulin 13 concertina-wise above the load, between a condition of covering and a condition of uncovering the load.

In this case, the movement mechanism 16 comprises two steel cables 17 disposed along the upper edges of the lateral sides 14 of the body 11.

On each cable 17 the arched ribs 15 are mounted removably.

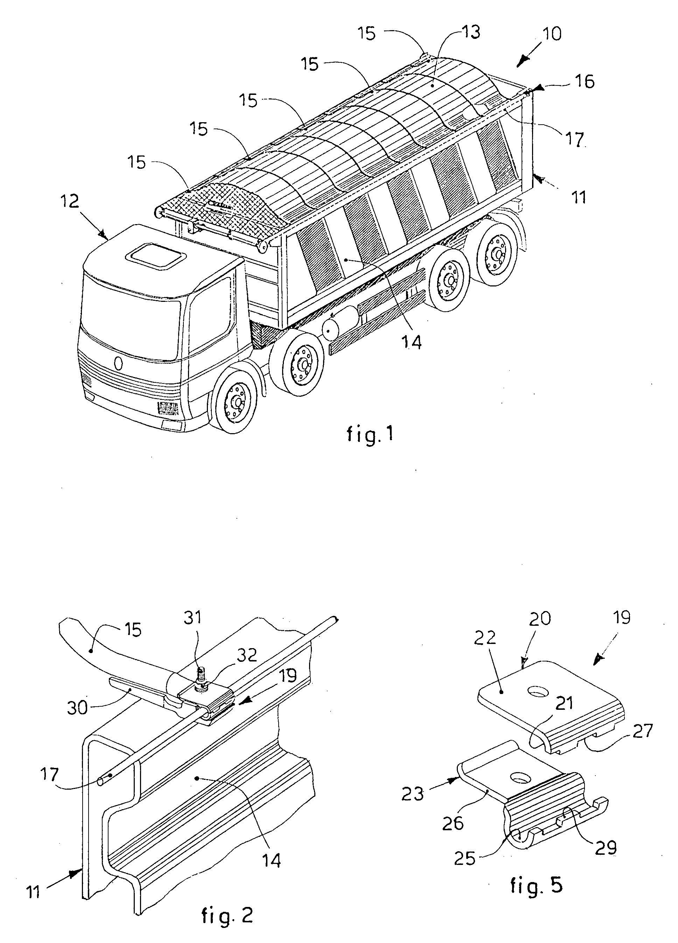

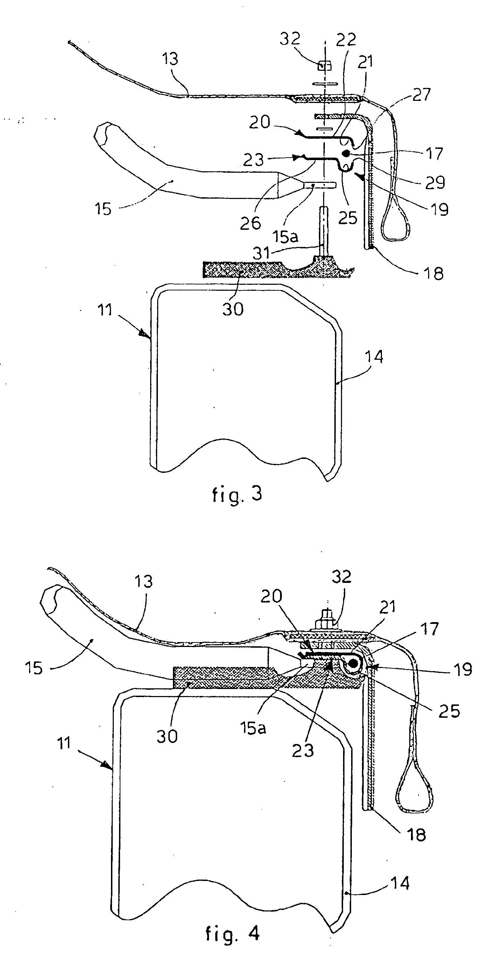

Each arched rib 15 comprises, at the ends, an attachment member 19 (figs. 2 and 3), which determines the removable assembly of the arched rib 15 on the cable 17.

In this case, the protective tarpaulin 13 is attached to the arched ribs 15 by means of a tarpaulin guide element 18.

According to the invention, the attachment member 19 comprises a first anchoring element 20 having a first arched portion 21, able to be coupled externally to a corresponding segment of the cable 17, and a second flattened portion 22, able to be removably fixed to a corresponding flattened end 15a of the arched rib 15.

The attachment member 19 also comprises a second anchoring element 23, opposite and coordinated with the first anchoring element 20, to surround and wind the cable 17.

In particular, the second anchoring element 23 comprises a first arched portion 25 able to cooperate with the first arched portion 21 of the first anchoring element 20, so as to define, in the coupled condition, a substantially circular seating which surrounds and protects the cable 17, while still guaranteeing that it slides freely.

Furthermore, the second anchoring element 23 comprises a second flattened portion 26, able to be removably attached to the flattened portion 15a of the arched rib 15, on the opposite side with respect to the second portion 22 of the first anchoring element 20.

The first arched portions 21 and 25 of each anchoring element 20, 23 comprise respective coupling edges 27 and 29, with reciprocally meshed teeth, coordinately shaped to define a same-shape coupling of the two anchoring elements 20, 23.

This solution allows a relative structural continuity between the two anchoring elements 20, 23 and therefore of the attachment member 19, in the assembled condition.

In this case, each arched rib 15 is able to slide on the sides 14 by means of relative pads 30. Each pad 30 comprises a threaded rod 31 able to cooperate with the flattened portion 15a, and with the tarpaulin guide element 18, to allow the attachment, by means of a corresponding nut 32, of the rib 15 and the protective tarpaulin 13.

Advantageously, the second portions 22 and 26 of the two anchoring elements 20, 23 also cooperate with the threaded rod 31 so that the threaded rod 31 determines the clamping of the attachment member 19 to the arched rib 15.

In this way, by unscrewing the nuts 32 of the same arched ribs 15, only the relative attachment members 19 are released, without affecting either the movement mechanism 16 or the adjacent arched ribs 15.

In fact, the unscrewing of the nuts 32 from the threaded rod 31 allows to unlock and open the two elements 20 and 23 each other, thus freeing the relative arched rib 15 that can be substituted or repaired without affecting either the adjacent ribs 15 or the cable 17.

It is clear, however, that modifications and/or additions of parts may be made to the covering device 10 as described heretofore, without departing from the field and scope of the present invention as defined in the claims.

For example, it comes within the field of the present invention to provide that instead of the coupling edges 27 and 29, a hinge is provided, which articulates the first anchoring element 20 and the second anchoring element 23 with respect to each other.

It should also be noted that the attachment member 19 can be made indifferently of metal material, composite material or other materials, even lighter.

## Claims

1. Covering device for the body (11) of a means of transport (12) comprising at least a tarpaulin (13), a plurality of transverse elements (15), such as an arched rib or the like, disposed sliding on the length of said body (11) and able to draw said tarpaulin (13) concertina-wise and extend it above said body (11), and mechanical movement means (16) comprising at least a cable or a rope (17), associated with said body (11) and able to move said transverse elements (15), in order to move said tarpaulin (13) between a covered position and an uncovered position of the load, wherein each transverse element (15) comprises respective attachment members (19) able to allow the rapid assembly/dis-assembly thereof on said mechanical movement means (16), to allow the detachment thereof from said mechanical movement means (16) without affecting the adjacent transverse elements (15), wherein each of said transverse element (15) comprises a flattened end (15a), **characterized in that** each attachment member (19) comprises at least:
- a first element (20) comprising at least a first arched part (21) for removably coupling with a relative portion of said cable (17) and a second substantially flat portion (22) for removably coupling with said flattened end (15a) of the relative transverse element (15),
- a second element (23) comprising a first arched part (25) conformed coordinately with said first arched part (21) of said first element (20) so as to define a substantially circular seating inside which the cable (17) is protected and may freely slide, and a second substantially flat portion (26) for removably coupling with said flattened end (15a) of the relative transverse element (15),
- a single attachment element (31, 32) for selectively clamping/releasing each other the first element (20) with its arched part (21), the second element (23) with its arched part (25), the flattened part (15a) of the transverse element (15) and the tarpaulin (13).

2. Device as in claim 1, **characterized in that** said attachment element comprises a threaded rod (31) and at least one nut (32) able to be threaded on said rod (31) for clamping each other the two elements (20, 23) of the relative attachment element (19) and for clamping the attachment element (19) to the relative transverse element (15) and to the tarpaulin (13).

3. Device as in any claim hereinbefore, **characterized in that** said first element (20) and said second element (23) comprise a reciprocally shaped toothed segment (27, 29), able to define a same-shape coupling substantially circular portion between them inside which the cable (17) is able to slide.

4. Device as in claim 1, **characterized in that** said first element (20) and said second element (23) are hinged to each other.

5. Device as in any claim hereinbefore, wherein each transverse element (15) is mounted on relative sliding pads (30) with respect to said body (11), **characterized in that** said attachment members (19) are provided in correspondence with said sliding pads (30) and are mounted on the relative transverse element (15) by means of the same attachment elements (31, 32).

## Patentansprüche

1. Abdeckvorrichtung für einen Aufbau (11) eines Transportmittels (12) umfassend zumindest eine Plane (13), eine Vielzahl von Querträgerelementen (15), wie eine gebogene Rippe oder ähnliches, gleitend auf der Länge des Aufbaus (11) aufgelegt und fähig, um die Plane (13) ziehharmonika-ähnlich zu ziehen und über dem Aufbau (11) auszubreiten, und mechanische Bewegungsmittel (16), umfassend zumindest ein Kabel oder ein Seil (17), verbunden mit dem Aufbau (11) und fähig, um die Querträgerelemente (15) zu bewegen, um die Plane (13) zwischen einer abgedeckten Position und einer offenen Position der Ladung zu bewegen, wobei jedes Querträgerelement (15) jeweils Anschlussteile (19) aufweist, die fähig sind, um eine schnelle Montage/Demontage dieser an den mechanischen Bewegungsmitteln (16) zu erlauben, um die Trennung dieser von den mechanischen Bewegungsmitteln (16) ohne Beeinflussung der angrenzenden Querträgerelemente (15) zu erlauben, wobei jedes der Querträgerelemente (15) ein abgeflachtes Ende (15a) umfasst,
**dadurch gekennzeichnet,**
**dass** jedes Anschlussteil (19) zumindest umfasst:
- ein erstes Element (20), umfassend zumindest ein erstes gebogenes Stück (21) zur lösbaren Kopplung mit einem jeweiligen Abschnitt des Kabels (17) und einen zweiten im Wesentlichen flachen Abschnitt (22) zur lösbaren Kopplung mit dem abgeflachten Ende (15a) des jeweiligen Querträgerelements (15),
- ein zweites Element (23), umfassend ein erstes gebogenes Stück (25) entsprechend aufeinander abgestimmt mit dem ersten gebogenen Stück (21) des ersten Elements (20), so dass diese eine im Wesentlichen runde Befestigungsfläche definieren, innerhalb der das Kabel (17) gesichert ist und frei gleiten kann, und einen zweiten im Wesentlichen flachen Abschnitt (26) zur lösbaren Kopplung mit dem abgeflachten Ende (15a) des jeweiligen Querträgerelements (15),
- ein einziges Befestigungselement (31, 32) zur punktuellen gegenseitigen Klemmung/Lösung des ersten Elementes (20) mit dessen gebogenem Stück (21), des zweiten Elements (23) mit dessen gebogenen Stück (25), des abgeflachten Teils (15a) des Querträgerelementes (15) und der Plane (13).

2. Vorrichtung nach Anspruch 1,
**dadurch gekennzeichnet,**
**dass** das Befestigungselement eine Gewindestange (31) und zumindest eine Mutter (32) umfasst, die fähig ist, auf die Stange (31) zum Zusammenklemmen der zwei Elemente (20, 23) des jeweiligen Anschlussteils (19) aufgeschraubt zu werden und zum Klemmen des Anschlussteils (19) an das jeweilige Querträgerelement (15) und an die Plane (13).

3. Vorrichtung nach irgendeinem der vorherigen Ansprüche,
**dadurch gekennzeichnet,**
**dass** das erste Element (20) und das zweite Element (23) ein kopplungssymetrisch geformtes gezahntes Segment (27, 29) umfasst, geeignet, um einen gleichgeformten im Wesentlichen runden Abschnitt zwischen diesen zu definieren, innerhalb dem das Kabel (17) fähig ist zu gleiten.

4. Vorrichtung nach Anspruch 1,
**dadurch gekennzeichnet,**
**dass** das erste Element (20) und das zweite Element (23) zu einander klappbar angeordnet sind.

5. Vorrichtung nach irgendeinem der vorherigen Ansprüche,
wobei jedes Querträgerelement (15) jeweils bezogen auf den Aufbau (11) auf Gleitunterlagen (30) montiert ist,
**dadurch gekennzeichnet,**
**dass** die Anschlussteile (19) korrespondierend mit den Gleitunterlagen (30) bereitgestellt werden und mit dem jeweiligen Querträgerelement (15) mittels derselben Befestigungselemente (31, 32) verbunden sind.

## Revendications

1. Dispositif de couverture pour le châssis (11) d'un moyen de transport (12) comprenant au moins une bâche (13), une pluralité d'éléments transversaux (15), comme un arceau ou un élément similaire, disposés de façon glissante sur la longueur dudit châssis (11) et aptes à tirer ladite bâche (13) en accordéon et à l'étendre au-dessus dudit châssis (11), et un moyen de déplacement mécanique (16) comprenant au moins un câble ou une corde (17), associé audit châssis (11) et apte à déplacer lesdits éléments transversaux (15), afin de déplacer ladite bâche (13) entre une position couverte et une position découverte du chargement, dans lequel chaque élément transversal (15) comprend des organes de fixation respectifs (19) aptes à permettre le montage/démontage rapide de celui-ci sur ledit moyen de déplacement mécanique (16), pour permettre de détacher celui-ci dudit moyen de déplacement mécanique (16) sans interférer avec les éléments transversaux (15) adjacents, dans lequel chacun desdits éléments transversaux (15) comprend une extrémité aplatie (15a), **caractérisé en ce que** chaque organe de fixation (19) comprend au moins :
- un premier élément (20) comprenant au moins une première partie arquée (21) destinée à s'accoupler de façon amovible avec une partie relative dudit câble (17) et une deuxième partie, substantiellement plate, (22) destinée à s'accoupler de façon amovible avec ladite extrémité aplatie (15a) de l'élément transversale relatif (15),
- un deuxième élément (23) comprenant une première partie arquée (25) dont la forme est coordonnée à celle de ladite première partie arquée (21) dudit premier élément (20) afin de définir un siège substantiellement circulaire à l'intérieur duquel le câble (17) est protégé et peut glisser librement, et une deuxième partie substantiellement plate (26) destinée à s'accoupler de façon amovible avec ladite extrémité aplatie (15a) de l'élément transversal relatif (15),
- un élément de fixation simple (31, 32) pour pincer/libérer sélectivement entre eux le premier élément (20) avec sa partie arquée (21), le deuxième élément (23) avec sa partie arquée (25), la partie aplatie (15a) de l'élément transversal (15) et la bâche (13).

2. Dispositif selon la revendication 1, **caractérisé en ce que** ledit élément de fixation comprend une tige filetée (31) et au moins un écrou (32) apte à être vissé sur ladite tige (31) pour serrer entre eux les deux éléments (20, 23) de l'élément de fixation relatif (19) et pour serrer l'élément de fixation (19) sur l'élément transversal relatif (15) et sur la bâche (13).

3. Dispositif selon l'une quelconque des revendications qui précèdent, **caractérisé en ce que** ledit premier élément (20) et ledit deuxième élément (23) comprennent un segment denté de forme réciproque (27, 29), aptes à définir une partie d'accouplement de forme identique substantiellement circulaire entre eux à l'intérieur de laquelle le câble (17) peut glisser.

4. Dispositif selon la revendication 1, **caractérisé en ce que** ledit premier élément (20) et ledit deuxième élément (23) sont liés entre eux par l'intermédiaire d'une articulation.

5. Dispositif selon l'une quelconque des revendications qui précèdent, dans lequel chaque élément transversal (15) est monté sur des patins glissants relatifs (30) par rapport audit châssis (11), **caractérisé en ce que** lesdits organes de fixation (19) sont placés en correspondance avec lesdits patins glissants (30) et sont montés sur l'élément transversal relatif (15) au moyen des mêmes éléments de fixation (31, 32).
